# NOUVEAU FASCICULE DE BREVET EUROPEEN

(11) **EP 0 329 497 B2**
(45) Date de publication et mention de la décision concernant l'opposition: **16.04.1997**
(45) Mention de la délivrance du brevet: 24.03.1993
(21) Numéro de dépôt: 89400168.4
(22) Date de dépôt: 20.01.1989
(51) Int. Cl.: G06K 19/067, G07F 7/10

(54) **Système de contrôle de personnes par carte à puces**
Personenkontrollsystem unter Verwendung von IC-Karten
Individual checking system using IC-cards

(30) Priorité: 26.01.1988 FR 8800858
(43) Date de publication de la demande: 23.08.1989
(73) Titulaire: SGS-THOMSON MICROELECTRONICS S.A., 94250 Gentilly (FR)
(72) Inventeur: Albacete, Bruno, F-75116 Paris (FR)
(74) Mandataire: Ballot, Paul Denis Jacques

(56) Documents cités:
- EP-A- 0 081 921
- EP-A- 0 207 320
- WO-A-82/03484
- CH-A- 600 450
- DE-A- 2 512 902
- DE-A- 2 852 941
- DE-A- 3 148 850
- US-A- 4 211 919
- IEEE Spectrum 1984, S.B. Weinstein: "Smart credit cards: the answer to cashless shopping", pages 43-49.
- CHIP CARD NEWS, no. 5, avril 1983, Paris; A.TURBAT "Security aspects in a chip card POS Payment System", pages 5-7.

## Description

L'invention concerne les systèmes de contrôle de personnes à partir de cartes à puces contenant des données d'identification de ces personnes.

Le développement de la technologie des cartes à puces fait qu'on envisage actuellement de remplacer un certain nombre de documents administratifs par des cartes à puces contenant des informations fixes ou variables auparavant contenues dans des documents imprimés.

On envisage par exemple que les passeports, les cartes d'identité, les permis de conduire, et bien d'autres documents puissent être remplacés par une carte à puce que le titulaire pourrait transporter avec lui et qui présenterait plusieurs avantages par rapport aux documents imprimés:
- d'abord, une seule carte à puce pourrait contenir toutes les informations contenues dans plusieurs documents administratifs, et on réduirait donc de manière importante l'encombrement des pièces administratives que les gens sont obligés de transporter en permanence avec eux;
- ensuite, on gagnerait en sécurité si on prend la précaution de prévoir un code secret d'accès à la carte, connu du seul titulaire; ainsi, en cas de vol, la carte ne pourrait pas être lue ni utilisée par le voleur.

Cependant, les documents administratifs mentionnés ci-dessus à titre d'exemple sont habituellement susceptibles d'être contrôlés par les autorités administratives de la nation. Il est légal par exemple en France et dans bien d'autres pays que les autorités policières soient habilitées à contrôler les permis de conduire et pièces d'identité, notamment en cas de constatation d'infractions au code de la route.

Il faut donc que ces autorités puissent contrôler des documents administratifs officiels même s'ils se présentent sous forme d'une carte à puce, et même si ces cartes ne sont accessibles en lecture qu'au moyen d'un code confidentiel connu du seul titulaire.

Par ailleurs, il faut bien voir qu'on s'oriente vers une situation dans laquelle pourront être inscrites dans les cartes à puces des informations qui peuvent être défavorables au titulaire. Par exemple, on peut imaginer que dans l'avenir, les autorités policières de contrôle de la circulation routière soient habilitées à inscrire directement et immédiatement dans une carte à puce la constatation d'infractions au code de la route commises par le titulaire de la carte (ces autorités sont dès aujourd'hui habilitées à dresser des procès-verbaux de condamnation à des amendes plus ou moins fortes).

Des abus sont possibles à partir du moment où on simplifiera les formalités et les documents aboutissant à de telles condamnations. C'est pourquoi il est important de prévoir des systèmes empêchant de tels abus.

Le but de la présente invention est de prévoir un système de contrôle de titulaires de cartes à puces permettant de limiter les erreurs et les abus qui peuvent être engendrés par le remplacement d'un système de contrôle à base de documents écrits par un système à base d'informations électroniques.

Selon l'invention on propose un système de contrôle de titulaires de carte à puce, comprenant un lecteur de carte apte à effectuer une lecture d'informations contenues dans une carte à puce, dite première carte à puce, et à effectuer une inscription d'informations non volatiles dans cette carte, caractérisé en ce qu'il comporte des moyens pour n'autoriser la lecture de la carte à puce qu'après stockage dans cette carte d'une manière non volatile et indélébile des informations représentatives de l'identité d'une autorité de contrôle qui contrôle ladite carte.

Selon l'invention,de préférence, on propose un système de contrôle de titulaires de cartes à puces, comprenant un lecteur de cartes à puces apte à effectuer des opérations de lecture et d'inscription non volatile d'informations dans ces cartes, ce système comportant des moyens pour recevoir simultanément ou successivement une première carte appartenant à un titulaire contrôlé et une deuxième carte appartenant à une autorité de contrôle, et des moyens pour transférer automatiquement de la deuxième carte vers la première et inscrire de manière non volatile dans cette première carte une information électronique d'identification de l'autorité de contrôle.

Ainsi, non seulement une lecture et des inscriptions d'informations ne pourront être effectuées dans la carte d'un titulaire que par une autorité habilitée, possédant une carte à puce spécifique permettant d'autoriser le fonctionnement du lecteur de cartes en vue de lire ou écrire des informations dans la carte du titulaire contrôlé, mais, surtout, l'autorité qui effectue le contrôle sera identifiée dans la carte que conserve la personne contrôlée, ce qui lui permettra ensuite de se référer à cette autorité ou à une autorité supérieure en cas de contestation.

Comme cela est dassique dans les cartes à puces on prévoira en outre qu'aussi bien le titulaire contrôlé que l'autorité de contrôle n'aura accès à sa propre carte, que ce soit pour y lire ou écrire des informations ou pour rendre possible le fonctionnement du système de contrôle, que par l'intermédiaire d'un code secret qu'il est seul à connaître.

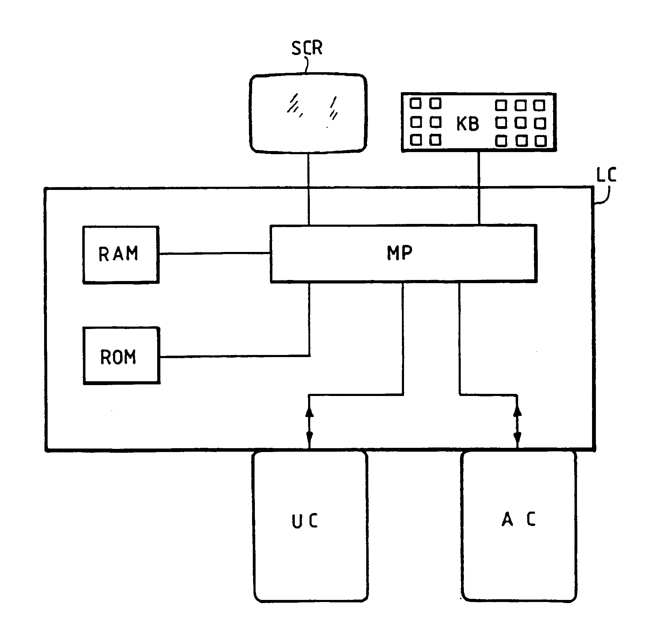

D'autres caractéristiques et avantages de l'invention apparaîtront à la lecture de la description détaillée qui suit et qui est faite en référence aux dessins annexés dans lesquels la figure unique représente un schéma bloc fonctionnel du système de contrôle selon l'invention.

Dans le système de contrôle selon l'invention, les éléments principaux sont donc une carte à puce UC attribuée à un utilisateur qui est le titulaire unique de cette carte, une autre carte à puce AC attribuée à une autorité susceptible de contrôler les titulaires de cartes d'utilisateur UC, et un lecteur de cartes dans lequel peuvent être insérées au cours d'une même opération de contrôle à la fois une carte UC de titulaire et une carte AC d'autorité de contrôle.

Dans la pratique, le lecteur de cartes pourra comprendre soit deux fentes d'introduction de cartes, dédiées l'une à la carte d'utilisateur et l'autre à la carte de l'autorité, soit une fente unique d'introduction dans laquelle seront introduites successivement, au cours de deux phases distinctes de l'opération de contrôle, d'abord l'une des cartes, par exemple la carte de l'autorité de contrôle, puis l'autre.

La carte de l'utilisateur est une carte à mémoire pouvant comprendre des zones de mémoire inaccessibles en lecture comme en écriture, et des zones de mémoire accessibles en lecture seule ou en écriture seule sous condition d'autorisation par un code d'accès connu du titulaire de la carte seulement.

La carte de l'autorité de contrôle est aussi de préférence une carte à mémoire similaire à la carte de l'utilisateur. En tout cas elle comporte un code d'identification, de préférence contenu dans une zone de mémoire morte programmable électriquement. Ce code est accessible de préférence uniquement sous condition d'autorisation par un code d'accès connu uniquement de l'autorité de contrôle titulaire de la carte.

Le lecteur de cartes LC comporte les moyens électromécaniques classiques, non représentés, nécessaires à l'établissement de connexions avec les cartes introduites dans le lecteur, et les moyens d'alimentation électrique de ces cartes à travers ces connexions.

Le coeur du lecteur de cartes comporte un micro processeur MP qui permet de commander des échanges de données entre le lecteur et une carte placée dans le lecteur et qui est classiquement raccordé à des mémoires mortes de programmes (ROM) et des mémoires vives de travail (RAM). Les cartes UC etAC peuvent aussi comprendre chacune un microprocsseur si les fonctions qu'elles doivent remplir sont particulièrement complexes et en particulier si la sécurité des informations qu'elles contiennent doit être assurée d'une manière très stricte.

De préférence, le lecteur de cartes est connecté à un davier KB, également contrôlé par le microprocesseur MP du lecteur. Ce davier permet d'une part l'introduction de données dans l'une ou l'autre carte, et notamment, comme on le verra, dans la carte UC de l'utilisateur, mais aussi de communiquer au microprocesseur un code d'accès confidentiel que le microprocesseur va comparer (directement ou par l'intermédiaire d'un autre microprocesseur ou de tout autre circuit interne à la carte) à un code contenu dans la carte.

Enfin, il est prévu en principe un écran SCR de visualisation de données, raccordé au lecteur de cartes, pour permettre l'affichage soit de données introduites à partir du davier KB, soit de données fournies par le microprocesseur MP et provenant notamment de l'une ou l'autre des cartes introduites dans le lecteur, soit encore de messages fournis par le microprocesseur MP pour faciliter le déroulement de l'opération de contrôle.

L'opération de contrôle se déroule par exemple de la manière suivante:
- insertion de la carte AC de l'autorité de contrôle dans une fente du lecteur de carte;
- exécution parle microprocesseur MP d'une procédure dassique de reconnaissance de la présence d'une carte, fourniture et affichage sur l'écran de visualisation SCR de messages d'erreur si la carte est mal introduite, de messages d'aide, de messages pour la suite de la procédure, du type "fermer le volet de protection", "frappez votre code secret", etc.
- exécution par le microprocesseur d'une procédure dassique de reconnaissance d'un code secret d'habilitation introduit à partir du clavier; par exemple, le microprocesseur transfère vers la carte AC le code frappé sur le clavier KB et les circuits internes de la carte reconnaissent ce code pour fournir au microprocesseur un signal autorisant la suite de la procédure et pour débloquer, en vue de la suite de la procédure, l'accès dans la carte AC à une zone de mémoire spécifique contenant une information d'identification de l'autorité titulaire de la carte AC; par exemple cette information d'identification est constituée par le numéro de matricule de l'agent de la circulation effectuant le contrôle.
- le microprocesseur MP fournit alors les messages d'aide utiles à la suite de la procédure, et notamment un message réclamant l'insertion de la carte de l'utilisateur contrôlé;
- la carte UC de l'utilisateur est introduite dans une deuxième fente du lecteur de carte; une procédure dassique de vérification d'insertion et de reconnaissance est exécutée, avec, si nécessaire, les messages d'aide et les messages d'erreur appropriés;
- le microprocesseur affiche sur l'écran le message "frappez votre code secret", puis il exécute une procédure dassique de reconnaissance de code secret; par exemple, le code frappé alors sur le davier par le titulaire de la carte UC est transféré dans la carte UC; les circuits internes de la carte UC reconnaissent ce code, par comparaison avec un code contenu dans une zone de mémoire inaccessible directement; si le code est bon, il y aura possibilité de transfert de données de la carte UC vers le microprocesseur MP et vers l'écran de visualisation; des données comme le numéro de permis de conduire, de la carte d'identité, etc., peuvent ainsi être lues et affichées à des fins de contrôle.
- toutefois, le microprocesseur exécute d'abord l'opération spécifique consistant à transférer dans une zone de mémoire non-volatile de la carte UC (accessible en écriture dès lors que le code secret correspondant à cette carte a été reconnu) l'information d'identification de l'autorité de contrôle qui a été débloquée précédemment et qui peut donc être lue par le microprocesseur. D'autres informations peuvent être écrites facultativement au même moment, par exemple une information sur la date et le lieu du contrôle.
- si l'on veut assurer une sécurité plus grande à cette procédure d'inscription dans la mémoire non-volatile de la carte UC, on peut prévoir que le microprocesseur exécute alors une procédure de vérification, par exemple en allant lire dans la carte UC ce qui vient d'y être inscrit et en le comparant à l'information qui doit véritablement y être inscrite;
- ce n'est qu'ensuite que le microprocesseur assurera le transfert vers l'écran de visualisation d'informations contenues dans la carte de l'utilisateur contrôlé;
- enfin, si les procédures précédentes se sont déroulées sans erreur, le microprocesseur exécutera (dans les cas où ce sera nécessaire) un programme d'écriture de données dans des zones de mémoire non-volatiles prévues à cet effet; ces données seront par exemple constituées par la constatation d'une infraction à la circulation avec les circonstances de cette infraction et éventuellement les sanctions administratives et pécuniaires s'y rattachant. Ces données seront en principe introduites à partir du clavier KB et elles seront visualisées sur l'écran en même temps qu'elles sont introduites sur le clavier.

Dans le cas où le lecteur de cartes ne comporte qu'une seule fente d'introduction de cartes, il faudra légèrement modifier la procédure; en particulier, le microprocesseur devra lire et stocker (en mémoire volatile) l'information d'identification de l'autorité de contrôle dès la reconnaissance du code secret attaché à la carte AC de l'autorité; puis le microprocesseur affichera un message demandant de retirer la carte AC de la fente et d'introduire la carte UC de l'utilisateur. Après vérification du code secret correspondant à la carte de l'utilisateur, l'information d'identification de l'autorité de contrôle, conservée par le microprocesseur dans un registre de mémoire volatile, sera transférée vers la carte UC pour y être inscrite dans une zone de mémoire non-volatile.

## Revendications

1. Système de contrôle de titulaires de carte à puce, comprenant un lecteurs de carte apte à effectuer une lecture d'informations contenues dans une carte à puce, dite première carte à puce, et à effectuer une inscription d'informations non volatiles dans cette carte, caractérisé en ce qu'il comporte des moyens pour n'autoriser la lecture de la carte à puce qu'après stockage dans cette carte d'une manière non volatile et indélébile, des informations représentatives de l'identité d'une autorité de contrôle qui contrôle ladite carte.

2. Système selon la revendication 1, caractérisé en ce qu'il comporte
- des moyens pour recevoir simultanément ou successivement la dite première carte à puce (UC) appartenant à un titulaire contrôlé, et une deuxième carte à puce (AC) appartenant à ladite autorité de contrôle,
- des moyens (MP) pour transférer de la deuxième carte vers la première des informations représentatives de l'identité de l'autorité de contrôle, et
- des moyens pour n'autoriser la lecture du contenu de certaines zones de la mémoire de la première carte (UC) qu'après stockage non volatile dans cette première carte des informations représentatives de l'identité de l'autorité de contrôle.

3. Système de contrôle selon la revendication 2, caractérisé en ce qu'il comporte
- des moyens pour inhiber l'écriture d'autres données dans les zones non volatiles de la première carte tant que les informations représentatives de l'identité de l'autorité de contrôle n'ont pas été inscrites en mémoire non volatile.

4. Système de contrôle selon l'une des revendications 2 ou 3, caractérisé en ce que l'une au moins des deux cartes n'est accessible en lecture comme en écriture que sous condition d'introduction dans cette carte d'un code secret d'habilitation.

## Patentansprüche

1. System zur Inhaberkontrolle von Chipkarten, umfassend ein Kartenlesegerät (LC), das in der Lage ist, einen Lesevorgang für in einer als erste Chipkarte bezeichneten Chipkarte (UC) enthaltene Informationen zu bewirken, und ein Schreiben von nicht-flüchtigen Informationen in diese Karte zu bewirken, dadurch gekennzeichnet, daß es Mittel umfaßt, die erst dann das Lesen der Chipkarte gestatten, nachdem die die Identität einer die Karte kontrollierenden Kontrollautorität darstellende Informationen in dieser Karte auf nicht-flüchtige und nicht-löschbare Weise gespeichert worden sind.

2. System nach Anspruch 1, dadurch gekennzeichnet, daß es umfaßt
- Mittel, um gleichzeitig oder aufeinanderfolgend die erste Chipkarte (UC), die einem kontrollierten Inhaber gehört, und eine zweite Chipkarte (AC) aufzunehmen, die der Kontrollautorität gehört,
- Mittel (MP), um von der zweiten Karte zur ersten die die Identität der Kontrollautorität repräsentierenden Informationen zu übertragen, und
- Mittel, um das Lesen des Inhaltes bestimmter Speicherbereiche der ersten Karte (UC) erst nach nicht-flüchtiger Speicherung der die Identität der Kontrollautorität repräsentierenden Informationen zu gestatten.

3. Kontrollsystem nach Anspruch 2, dadurch gekennzeichnet, daß es
- Mittel umfaßt, um das Schreiben weiterer Daten in den nicht-flüchtigen Bereichen der ersten Karte zu hemmen, solange die die Identität der Kontrollautorität repräsentierenden Informationen nicht im nicht-flüchtigen Speicher eingeschrieben worden sind.

4. Kontrollsystem nach einem der Ansprüche 2 oder 3, dadurch gekennzeichnet , daß wenigstens die eine der beiden Karten beim Lesen wie beim Schreiben nur unter der Bedingung der Eingabe eines geheimen Ermächtigungscodes in die Karte zugänglich ist.

## Claims

1. System for checking holders of smart cards, comprising a card reader (LC) suitable for reading information contained in a smart card, referred to as the first smart card, and entering non-volatile information in this card, characterised in that it includes means for enabling the reading of the smart card only after the storage in this card, in a non-volatile and indelible manner, of information representing the identify of a checking authority that is checking the said card.

2. System according to Claim 1, characterised in that it includes
- means for receiving simultaneously or successively the said first smart card (UC) belonging to a holder who is being checked, and a second smart card (AC) belonging to the said checking authority,
- means (MP) for transferring, from the second card to the first, information representing the identity of the checking authority, and
- means for enabling reading of the contents of certatn memory areas of the first card (UC) only after non-volatile storage, in this first card, of information representing the identity of the checking authority.

3. Checking system according to Claim 2, characterised in that it includes
- means for inhibiting the writing of other data in the non-volatile areas of the first card so long as the information representing the identity of the checking authority has not been entered in the non-volatile memory.

4. Checking system according to one of Claims 2 or 3, characterised in that at least one of the two cards is accessible for reading and writing only if a secret authorisation code is fed into this card.
